# EUROPÄISCHE PATENTSCHRIFT

(11) **EP 3 835 533 B1**
(45) Veröffentlichungstag und Bekanntmachung des Hinweises auf die Patenterteilung: **06.03.2024**
(21) Anmeldenummer: 19214426.9
(22) Anmeldetag: 09.12.2019
(51) Int. Cl.: E05F 15/643, H02K 9/22

(54) **TÜRANTRIEB MIT EINER MOTOREINHEIT, AUFWEISEND EINE GERINGE BAUGRÖSSE**
DOOR DRIVE WITH A MOTOR UNIT HAVING A LOW INSTALLATION SIZE
ENTRAINEMENT DE PORTE DOTÉ D'UNE UNITÉ MOTEUR À FAIBLE ENCOMBREMENT

(43) Veröffentlichungstag der Anmeldung: 16.06.2021
(73) Patentinhaber: dormakaba Deutschland GmbH, 58256 Ennepetal (DE)
(72) Erfinder: Wagner, Martin, 58256 Ennepetal (DE); Busch, Sven, 58256 Ennepetal (DE); Finis, Dietmar, 58256 Ennepetal (DE)
(74) Vertreter: Balder IP Law, S.L.

(56) Entgegenhaltungen:
- EP-A1- 3 534 504
- WO-A2-03/041241
- DE-A1-102014 115 932

## Beschreibung

Die Erfindung betrifft einen Türantrieb zur Anordnung an oder in Verbindung mit einer Türanlage, mit dem zumindest ein Flügelelement der Türanlage bewegbar ist, aufweisend eine Motoreinheit mit einem Gehäuse, in dem ein Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung bringbar ist. Weiterhin betrifft die Erfindung eine Türanlage mit einem solchen Türantrieb, aufweisend wenigstens ein Flügelelement, mit dem der Türantrieb antreibend in Wirkverbindung steht.

Aus der DE 10 2008 046 062 A1 ist ein Türantrieb zur Anordnung an einer Türanlage bekannt, und der Antrieb dient zur Bewegung von Flügelelementen der Türanlage, die als automatische Schiebetür ausgebildet ist. Der Türantrieb weist hierfür eine Motoreinheit mit einem Gehäuse auf, und an das Gehäuse der Motoreinheit ist eine Getriebeeinheit angebracht, die als Schneckenradgetriebe ausgeführt ist. Damit ist die Motoreinheit als schnelldrehender Motor konzipiert, und mit der Getriebeeinheit wird die höhere Drehzahl des Rotors der Motoreinheit reduziert auf eine geringere Drehzahl zum Antrieb einer Riemenscheibe, die auf eine Abtriebswelle der Getriebeeinheit aufgesetzt ist.

Über die Riemenscheibe wird ein Zahnriemen gelegt, der mit den Flügelelementen der automatischen Schiebetür verbunden wird. Da die Motoreinheit schnelldrehend ausgelegt ist, und die Drehzahl auf die Riemenscheibe reduziert werden muss, ist in Verbindung mit dem Motor die Getriebeeinheit notwendig, wodurch zusätzlicher Bauraum erforderlich wird, und wodurch die Konstruktion des Türantriebs komplexer wird. Die räumliche Dimensionierung des Türantriebs muss an die Notwendigkeit der Getriebeeinheit angepasst werden, und da der Motor eine zylinderförmige Grundform aufweist, nimmt dieser einen Bauraum ein, der in Bezug auf seine Einbauumgebung keine optimale Raumnutzung ermöglicht. Gleiches gilt für ein Schneckenradgetriebe, das insbesondere in Verbindung mit dem Motor sehr bauraumintensiv ist.

Wünschenswert ist daher eine möglichst kompakt aufgebaute Motoreinheit, die eine hohe Leistungsdichte aufweist und langfristig in Betrieb gestellt werden kann. Kompakt bauende Motoren mit einer hohen Leistungsdichte bringen jedoch häufig den Nachteil einer großen Wärmeentwicklung mit sich, insbesondere wenn die Motoreinheit eine hohe Einschaltdauer aufweist. Daher stellt sich zumeist das Problem einer effektiven Entwärmung insbesondere des Stators, auf dem der Wicklungsdraht aufgebracht ist. Wird die Motoreinheit gehäuselos oder zumindest nur mit einem Teilgehäuse ausgeführt, so kann der Stator frei gekühlt werden, jedoch erfordert eine solche Motorbauart in der Regel Lagerschilde an den axialen Endseiten des Motors mit in diesen eingebrachten Lagerungen für den Rotor, wodurch sich die Baugröße der Motoreinheit erheblich verlängert.

Insbesondere dann, wenn die Abtriebswelle zur direkten Aufnahme einer Riemenscheibe in der eingebauten Türanlage horizontal verlaufen soll, muss die Motorbauform gerade in Erstreckungsrichtung der Abtriebswelle kurz ausfallen, da es sonst zu Bauraumproblemen im Einbau der Motoreinheit kommt. Dies liegt darin begründet, dass der mit einem Zahnriemen über die Riemenscheibe angetriebene Läufer im Trägerprofil, der zur Aufnahme eines Flügelelementes beispielsweise einer automatischen Schiebetür dient, noch innerhalb des Trägerprofils an der Riemenscheibe vorbeilaufen können muss. Daher sollte die Motoreinheit in Erstreckungsrichtung der Rotorachse möglichst kurzbauend ausfallen.

Einen weiteren Türantrieb offenbart die DE 10 2014 115 932 A1, und der Türantrieb weist als Grundkörper einen einteiligen quaderförmigen Körper auf, in den Aussparungen zu der Aufnahme einer Motoreinheit und einer Getriebestufe eingebracht sind. Zur weiteren Aufnahme einer Steuerung, einem Netzteil und dergleichen sind in dem Block weitere Aussparungen und Öffnungen vorgesehen. Der quaderförmige Körper bildet also ein Gehäuse als Träger der einzelnen Komponenten des Türantriebes und ist über der gesamten Abmessung des Antriebes einteilig und gewissermaßen monolithisch ausgeführt. Eine vorteilhafte Entwärmung des Stators und seines Wicklungsdrahtes erfolgt bei einer solchen Ausführung einer kompakten Motor-Getriebeeinheit gleichfalls nicht, da der Stator innerhalb des monolithischen Blockes eingekapselt ist.

Grundsätzlich wird bei der Konstruktion von Türantrieben zur Anordnung an oder zur Anordnung in Verbindung mit einer Türanlage das Ziel verfolgt, den Türantrieb möglichst kompakt und mit kleinen Abmessungen auszuführen, beispielsweise indem eine Getriebeeinheit oder eine Getriebestufe innerhalb des Türantriebs bereits vermieden wird. Türantriebe werden üblicherweise oberhalb der linear bewegbaren Flügelelemente einer automatischen Schiebetüranlage angeordnet und weisen ein Trägerprofil auf, das einen Grundkörper der Türanlage bildet und am Trägerprofil werden der Türantrieb integriert montiert und gleichermaßen die Flügelelemente linear geführt. Als Verbindungsmittel zwischen dem Türantrieb und den Flügelelementen dient in der Regel ein Zahnriemen, wobei auch andere Zugmittel wie Kettenverbindungen und dergleichen möglich sind. Der Türantrieb bildet dabei mit wenigstens dem Motor, einem Netzteil und einer Steuerung eine eigene Baueinheit, die mit der Anordnung am Trägerprofil in die Türanlage integriert wird.

Um das Trägerprofil mit einer entsprechenden Blende, einem Gehäuse oder sonstigen Umbauteilen möglichst kleinbauend auszuführen, ist es von Vorteil, auch und insbesondere den Türantrieb selbst möglichst kompakt und mit kleinen Abmessungen auszuführen. Da jedoch Flügelelemente aus Glas große Massen erreichen können, muss der Türantrieb eine hohe Leistungsdichte aufweisen, um derartige Flügelelemente entsprechend stark beschleunigen und auch wieder verzögern zu können, damit die Türanlage auch mit großen Flügelelementen noch eine angemessene Dynamik erreicht.

Für eine hohe Leistungsdichte und insbesondere einen geräuscharmen Betrieb bieten sich Motoreinheiten in Verbindung mit einem Zahnriemen als Direktantriebe an, bei denen auf der Abtriebswelle der Motoreinheit unmittelbar die Riemenscheibe aufgebracht wird, über die der Zahnriemen gelegt wird, der wiederum unmittelbar mit den Flügelelementen in Verbindung steht. Dadurch kann der Türantrieb geräuschminimal betrieben werden, da keine hohen Motordrehzahlen erreicht werden, und bei entsprechender Auslegung der Motoreinheit können Leistungsdichten bereitgestellt werden, die hinreichend sind, um Flügelelemente von beispielsweise 200kg bis 250kg für den Betrieb einer automatischen Schiebetür hinreichend stark zu beschleunigen und auch wieder zu verzögern.

Bei einer Motoreinheit mit einem Direktantrieb werden häufig eher niedrige Drehzahlen des Rotors realisiert, sodass ein Lüfterrad im Rotor oder auf der Abtriebswelle zur Entwärmung des Stators eher nicht wirksam eingesetzt werden können. Es bleibt folglich das Erfordernis, eine kompakt bauende Motoreinheit zu schaffen, die ein im Wesentlichen geschlossenes Gehäuse aufweist, bei der aber trotzdem eine effektive Entwärmung des Stators möglich ist.

Aufgabe der Erfindung ist die Schaffung eines Türantriebs mit einer Motoreinheit, die eine hohe Integrationsdichte und eine hohe Leistungsdichte aufweist, und wobei der Motor in Verbindung mit dem wenigstens einen Flügelelement insbesondere als Direktantrieb ausgeführt sein soll. Trotz der hohen Integrationsdichte des Türantriebes soll eine kompakte Anordnung der Motoreinheit in Verbindung mit einem Netzteil und einer Steuerung erreicht werden, sowie mit weiteren Komponenten, beispielsweise einem Bedienteil. Dabei soll die Entwärmung des Stators auf vorteilhafte Weise möglich sein, um einen dauerhaften Betrieb der Motoreinheit bei einer hohen Einschaltdauer sicherzustellen.

Diese Aufgabe wird ausgehend von einem Türantrieb gemäß Anspruch 1 und ausgehend von einer Türanlage gemäß Anspruch 15 mit den jeweils kennzeichnenden Merkmalen gelöst. Vorteilhafte Weiterbildungen der Erfindung sind in den abhängigen Ansprüchen und in der Beschreibung angegeben.

Die Erfindung schließt die technische Lehre ein, dass das Gehäuse zumindest eine fensterartige Aussparung aufweist, in die ein Flächenabschnitt des Stators hineinragt. Die Oberfläche des Flächenabschnittes kann mit der Außenseite Fläche des Gehäuses mit der in diese eingebrachten Aussparung bündig in einer gemeinsamen Ebene abschließen. Insbesondere können in zwei sich beispielsweise gegenüberliegenden der vorderseitigen und rückseitigen Flächen jeweilige fensterförmige Aussparungen eingebracht sein, in die ein jeweiliger Flächenabschnitt des Stators hineinragt. Es ist denkbar, dass die vorderseitge und die rückseitige Fläche mit der jeweils zumindest einen fensterartigen Aussparung parallel zueinander angeordnet sind.

Dadurch wird auf einfache Weise die Möglichkeit geschaffen, den Stator trotz eines im Wesentlichen geschlossenen Gehäuses mit einem weiteren Körper in einen wärmeübertragenden Kontakt zu bringen, um den Stator effektiv zu entwärmen. Die fensterartige Aussparung weist eine Fläche auf, die nur einen kleinen prozentualen Teil der gesamten Oberfläche des Gehäuses der Motoreinheit ausmacht, beispielweise 2% bis 20% und bevorzugt 5% bis 15%.

Die erfindungsgemäße Lösung zur Entwärmung des Stators über eine fensterartige Aussparung im Gehäuse der Motoreinheit ist dann besonders vorteilhaft, wenn das Gehäuse der Motoreinheit zumindest zwei wenigstens mittelbar miteinander verbundene Gehäusehälften aufweist. Es ist denkbar, dass die fensterartige Aussparung durch die beiden Gehäusehälften zumindest teilweise gebildet ist. Es ist denkbar, dass die fensterartigen Aussparungen durch die beiden Gehäusehälften zumindest teilweise gebildet werden.

Es ist denkbar, dass das Gehäuse als ein Quader ausgebildet ist. Bevorzugt bilden die Gehäusehälften miteinander verbunden einen Quader aus. Ein Quader im Sinne der Erfindung ist ein Körper, der von sechs Rechteckflächen begrenzt wird, wobei die Rechteckflächen im Wesentlichen, aber nicht vollständig plan sein sollten, also durchaus Anformungen, Wölbungen, Schrägungen, Rippen und dergleichen aufweisen können. Insofern ist die Quaderform der Motoreinheit allenfalls annähernd im mathematischen Sinne zu verstehen; ein Rechteckkörper mit leichten Winkelabweichungen und Formabweichungen fällt damit auch noch unter dem Begriff des Quaders, ohne also am mathematischen Begriff eines Quaders zu haften. Da erfindungsgemäß auch nur die Grundform der Motoreinheit einen Quader bilden soll, kann die Grundform auch als eine Hüllform zu verstehen sein, ohne dass das Gehäuse der Motoreinheit die quaderförmige Hüllform exakt abbildet.

Die erfindungsgemäß ausgestaltete Motoreinheit kann mit der Quaderform auf vorteilhafte Weise in einen Türantrieb integriert werden, und durch die gebildeten Seitenflächen, die Stirnfläche, sowie eine plane Rückseite ermöglichen einen einfachen Aufbau des Türantriebs mit unmittelbar angrenzenden weiteren Komponenten, insbesondere Komponenten wie das Netzteil, die Steuerung und dergleichen.

Als wesentlicher Vorteil ist dabei die fensterartige Aussparung in einer Seitenfläche des Quaders eingebracht. Wird der quaderförmige Körper in oder an einem Trägerprofil angeordnet, so kann der freigelegte Flächenabschnitt des Stators trotz des kompakten Aufbaus des gesamten Türantriebs mit einem benachbarten Kühlkörper wenigstens mittelbar in Wärmeleitkontakt gebracht werden.

Weiterhin kann gemäß der Erfindung vorgesehen werden, dass die Gehäusehälften wenigstens mittelbar aneinander anliegend miteinander verschraubt sind und/oder wobei das Gehäuse zumindest zwei fensterartige Aussparungen auf sich gegenüberliegenden Außenseiten aufweist. Die Gehäusehälften können halbschalenförmig ausgeführt sein.

Es ist denkbar, dass, werden die Gehäusehälften miteinander verbunden, sich der so gebildete Gehäusekörper zu einem Quader vervollständigt. Die Gehäusehälften müssen dabei nicht zwingend eine exakte Hälfte des Gehäuses bilden, und die Teilungsebene zwischen den Gehäusehälften muss nicht auf einer halben Höhe einer Höhenkante des Quaders liegen.

Insofern können auch Gehäusehälften vorgesehen sein, die unterschiedlich bemaßt, gestaltet und dimensioniert sind, diese können jedoch in einer Weise aufeinander gebracht und verbunden sein, dass der Quader zur Bildung des Gehäuses entsteht, und so die Grundform der Motoreinheit bildet.

Die Gehäusehälften sind vorteilhafterweise so ausgestaltet, dass wenigstens der Stator und der Rotor innenseitig zwischen den Gehäusehälften aufgenommen sind. Insbesondere können die Gehäusehälften schalenartig ausgeführt werden, und diese werden mittelbar oder unmittelbar miteinander verbunden. Werden die Gehäusehälften unmittelbar miteinander verbunden, so wird ein umlaufender etwa rechteckförmiger Rand der jeweiligen Gehäusehälfte aufeinander gefügt, wobei bei einer mittelbaren Verbindung der Gehäusehälften miteinander auch ein Zwischenelement zwischen den Gehäusehälften angeordnet sein kann, beispielsweise ein Dichtelement oder dergleichen.

Die fensterartigen Aussparungen sind auf besonders vorteilhafte Weise auf sich gegenüberliegenden Außenseiten ausgebildet, sodass zur Entwärmung des Stators die Möglichkeit besteht, dass ein oder sogar zwei Entwärmungskörper in sich gegenüberliegender Weise an der Motoreinheit angeordnet werden.

Bevorzugt sind die fensterartigen Aussparung an sich gegenüberliegenden Seitenflächen des Quaders vorgesehen.

Mit besonderem Vorteil weist der Quader eine Längskante, eine Breitenkante und eine Höhenkante auf, wobei die Längskante größer ist als die Breitenkante und/oder wobei die Breitenkante größer ist als die Höhenkante. Beispielsweise weist die Breitenkante eine Länge von 70 % bis 98 %, insbesondere von 85 % bis 95 % von der Länge der Längskante auf. Die Höhenkante weist eine Länge von 30 % bis 60 %, insbesondere von 40 % bis 50 % von der Länge der Längskante auf. Beträgt die Länge der Längskante beispielsweise 100mm, so weist die Breitenkante eine Länge von beispielsweise 90mm auf, und die Höhenkante weist eine Länge von beispielsweise 40 mm bis 50 mm auf.

Insbesondere dann, wenn die Breitenkante ein geringeres Maß aufweist als die Längskante, kann die Motoreinheit im Türantrieb so integriert werden, dass die Breitenkante sich in der Vertikalen erstreckt, sodass der Türantrieb insbesondere in Anordnung über den Flügelelementen mit einer geringen Bauhöhe ausgelegt werde kann, die bestimmt ist durch die Bauhöhe des Türantriebs, und die Bauhöhe des Türabtriebs ist wiederum bestimmt durch die Breite der Motoreinheit, also durch die Länge der Breitenkante. Die fensterartigen Aussparungen sind dann mit besonderem Vorteil an einer nach oben gerichteten Seitenfläche und/oder an einer nach unten gerichteten Seitenfläche an der Motoreinheit ausgebildet.

Mit weiterem Vorteil spannen die Längskante und die Breitenkante eine Stirnfläche auf, wobei die Abtriebswelle senkrecht auf der Stirnfläche hervorsteht. Auf dem hervorstehenden Abschnitt der Abtriebswelle ist eine Riemenscheibe aufgebracht, und die Stirnfläche kann frei von Befestigungsmitteln ausgeführt sein, sodass der Riemen möglichst nah über der Stirnfläche geführt werden kann, wenn die Riemenscheibe bis vor die Stirnfläche geführt ist.

Mit weiterem Vorteil weist der Türantrieb wenigstens ein Netzteil und wenigstens eine Steuerung auf, wobei das Netzteil und die Steuerung zumindest mittelbar an den gegenüberliegenden Seitenflächen des Quaders angeordnet sind, wobei die gegenüberliegenden Seitenflächen über die Breitenkante und die Höhenkante des Quaders aufgespannt sind. Diese Seitenflächen sind beispielsweise aufgrund einer Quaderform der Motoreinheit 90° versetzt zu den Seitenflächen ausgerichtet, in denen die fensterartigen Aussparungen eingebracht sind.

Insofern sind das Netzteil und die Steuerung in der Verlängerung der Erstreckungsrichtung der Längskante des Quaders der Motoreinheit angeordnet, was dann vorteilhaft ist, wenn die Längskante der Motoreinheit sich parallel zur Längsrichtung eines Trägerprofils des Türantriebs erstreckt. In dieser Richtung ist die Integration des Türantriebs nicht so bauraumkritisch wie in einer Querrichtung hierzu, sodass die Längskante die größte Abmessung des Quaders der Motoreinheit aufweist. Die mittelbare Anordnung des Netzteiles und/oder der Steuerung an der Motoreinheit betrifft eine Anordnung, bei der wenigstens ein weiteres Bauteil zwischen dem Netzteil und/oder der Steuerung und der Motoreinheit vorhanden ist, beispielsweise eine Halterung oder ein Flansch.

Auch ist es von Vorteil, die Motoreinheit im Verbund mit dem Netzteil und/oder der Steuerung elektrisch zu isolieren, sodass zusätzlich ein Isolierungselement an die Seitenflächen der Motoreinheit angrenzen kann.

Es ist mit weiterem Vorteil ein erstes Flanschelement vorgesehen, das an einer ersten Seitenfläche angeordnet ist und das Netzteil aufnimmt und/oder dass ein zweites Flanschelement vorgesehen ist, das an einer zweiten Seitenfläche angeordnet ist und die Steuerung aufnimmt. Insbesondere ist somit die Motoreinheit über die beiden Flanschelemente im Türantrieb haltend aufgenommen. Durch die Anordnung der Flanschelemente an den Seitenflächen kann die Stirnfläche frei von Befestigungsmitteln und insbesondere frei von Flanschelementen ausgeführt werden, sodass der Zahnriemen, der über die Riemenscheibe gelegt ist, frei und möglichst nah über die Stirnfläche verlaufen kann. Die Seitenflächen mit den fensterartigen Aussparungen können an weiteren Seitenflächen vorgesehen sein.

Gemäß einer weiteren Ausführungsform des Türantriebes weist dieser einen Grundkörper auf. Der Grundkörper des Türantriebes ist insbesondere mittels eines Trägerprofils gebildet.

Es ist denkbar, dass die Motoreinheit in Bezug auf eine betriebsfertige Einbaulage so zum Trägerprofil ausgerichtet ist, dass die Abtriebswelle im Betriebszustand des Türantriebes eine horizontale Erstreckung aufweist. Der Grundkörper des Türantriebs wird mit besonderem Vorteil mit einem L-förmigen Aluminiumprofil gebildet.

Mit der horizontalen Erstreckung der Abtriebswelle verläuft diese quer zur Längsrichtung des Trägerprofils, so ergibt sich ein Verlauf des Riemens mit vertikal übereinander angeordneten Riemensträngen. Diese Ausführung ist vorteilhaft in Bezug auf die geforderte Bewegung der Flügelelemente und vorteilhaft in Bezug auf eine Integration einer Blockiereinrichtung für die Flügelelemente, die mit den Riemen in Verbindung gebracht werden.

Die Flanschelemente sind so ausgeführt, dass diese am Trägerprofil befestigt sind, sodass die Motoreinheit mittels der Flanschelemente am Trägerprofil angeordnet wird. Die Flanschelemente bilden im Stanz-Biegeverfahren hergestellte Blechbauteile, die so geformt sind, dass der Motor über seine Seitenflächen mit den Flanschelementen im Trägerprofil angebracht werden kann, und die Blechelemente nehmen zugleich auf der einen Seite der Motoreinheit das Netzteil und auf einer gegenüberliegenden Seite des Motors die Steuerung auf. Ferner können ein Bedien- und Anzeigenteil und weitere Komponenten zum Betrieb des Türantriebes mittels der Flanschelemente gleichermaßen aufgenommen werden.

Die Motoreinheit ist erfindungsgemäß relativ zum Trägerprofil so angeordnet, dass eines der Flächenabschnitte des Stators wenigstens mittelbar wärmeleitend in Kontakt mit dem Trägerprofil gebracht ist. Dabei kann zur besonders guten Wärmeübertragung, aber auch zur elektrischen Isolierung zwischen dem Flächenabschnitt des Stators und einem gegenüberstehenden Flächenabschnitt des Trägerprofils ein flächenförmiges Wärmeübergangsmittel zur Bildung des wärmeleitenden Kontaktes angeordnet sein. Weiterhin ist es von Vorteil, wenn wenigstens ein Flächenabschnitt des Stators durch die fensterartige Aussparung hindurch in einen Wärmeübergangskontakt mit einem separaten Kühlkörper gebracht ist.

Ferner ist vorteilhafterweise vorgesehen, dass die gegenüberliegenden Seitenflächen, die über die Breitenkante und die Höhenkante aufgespannt sind, geschlossen ausgebildet sind und/oder Kühlrippen aufweisen. Mittels der Kühlrippen wird eine konvektive Entwärmung der Motoreinheit über das Gehäuse weiter begünstigt, wodurch die Anbringung der Flanschelemente an den Seitenflächen mit den Kühlrippen aber nicht behindert wird. Der Stator der Motoreinheit weist eine im Wesentlichen runde Grundform auf, sodass im Körper des Quaders Eckbereiche gebildet werden, in denen Schraubbohrungen zur Anordnung der Flanschelemente und/oder eine Schraubanordnung zur Verschraubung der Gehäusehälften aufeinander und/oder eine Schraubanordnung zur Verschraubung des Stators an einer der Gehäusehälften angeordnet sind. Die Ausgestaltung der Motoreinheit mit einem im Wesentlichen ringförmigen Stator und einem quaderförmigen Gehäuse ergibt somit vorteilhaft die Möglichkeit, in den Eckbereichen die Befestigungsmittel zu integrieren, sodass die Motoreinheit selbst ebenfalls eine hohe räumliche Integrationsdichte aufweist und übrige Strukturbereiche in räumlicher Hinsicht nicht ungenutzt bleiben. Die Seitenflächen können zur weiter verbesserten Entwärmung eine Rippenstruktur aufweisen, wodurch die Anbringung der Flanschelemente nicht behindert wird.

Der Stator weist ungeachtet kleinerer Abweichungen wie Schraubenaufnahmen und dergleichen eine im Wesentlichen runde ober ringförmige Grundstruktur auf und der Stator ist in wenigstens einer der Gehäusehälften so aufgenommen, dass zwischen der radialen Außenseite des Stators und dem innenseitigen Aufnahmebereich der Gehäusehälfte ein wenigstens teilweise umlaufender Wärmeübergangsspalt ausgebildet ist. Dieser Wärmeübergangsspalt ist, um als solcher zur Wärmeübergabe vom Stator in die zumindest eine oder in beide Gehäusehälften zu dienen, mit Werten von beispielsweise zwischen - 0,05 mm bis 0,1 mm ausgelegt, sodass eine Übergangspassung zwischen dem Stator und dem Aufnahmebereich des Stators in der Gehäusehälfte oder in beiden Gehäusehälften entsteht. Wärme, die im Stator durch den Betrieb der Motoreinheit entsteht, kann auf vorteilhafte Weise an die Gehäusehälften übergehen und über diese an die Umgebung abgegeben werden.

Mit weiterem Vorteil weist der Stator Flächenabschnitte auf zwei sich gegenüberliegenden Außenseiten des Quaders auf, wobei die Flächenabschnitte mit fensterartigen Aussparungen in den sich gegenüberliegenden Außenseiten des Quaders korrespondieren. Dabei ist wenigstens eines der Flächenabschnitte des Stators durch die fensterartige Aussparung hindurch in einen Wärmeübergangskontakt mit dem Trägerprofil gebracht. Alternativ oder zusätzlich kann wenigstens einer der Flächenabschnitte des Stators durch die fensterartige Aussparung hindurch in einen Wärmeübergangskontakt mit einem separaten Kühlkörper gebracht werden.

Die Erfindung betrifft weiterhin eine Türanlage mit einem Türantrieb mit den vorstehend beschriebenen Merkmalen. Die Türanlage kann zumindest ein Verbindungselement zum Verbinden mit einem Flügelelement umfassen. Zusätzlich oder alternativ kann die Türanlage wenigstens ein Flügelelement, mit dem der Türantrieb antreibend in Wirkverbindung steht, aufweisen.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene des Trägerprofils, laufen. Der Riemen kann zwischen Riemenscheiben der Türanlage gespannt sein. Eine der Riemenscheiben kann als die Riemenscheibe des erfindungsgemäßen Türantriebs ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs mit einer Motoreinheit, die erfindungsgemäß fensterartige Aussparungen im Gehäuse aufweist,
- Fig. 2: eine perspektivische Ansicht der erfindungsgemäßen Motoreinheit,
- Fig. 3: eine Ansicht der Motoreinheit gemäß Fig. 2 aus einer weiteren Perspektive und ohne die erste, obere Gehäusehälfte und
- Fig. 4: eine Querschnittsansicht der Motoreinheit in Anordnung am Trägerprofil des Türantriebs.

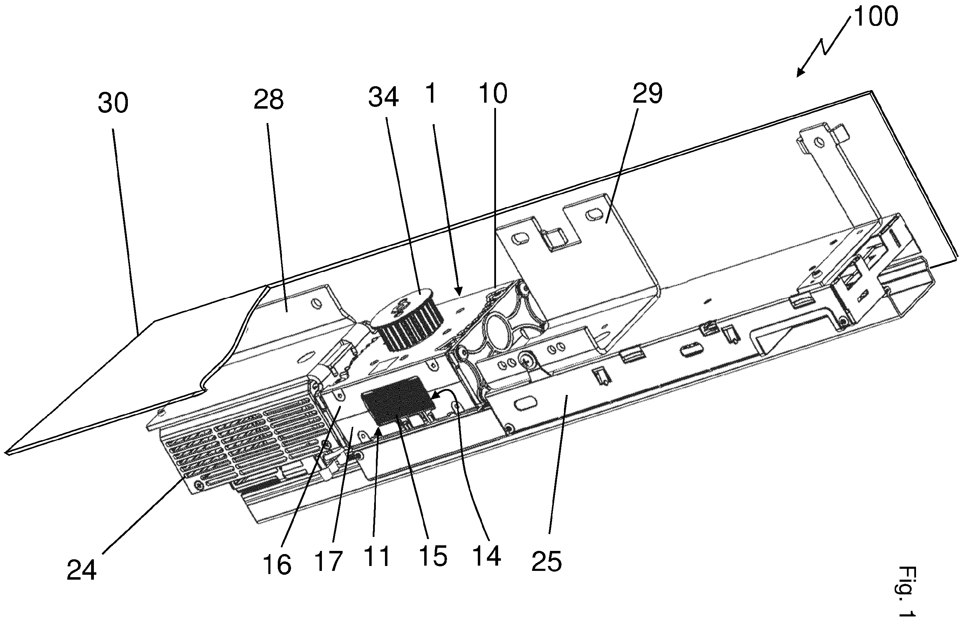

Fig. 1 zeigt eine Gesamtansicht des Türantriebs 100, wie dieser in einem Gebäude installiert werden kann, womit auch die Installation auf Schiffen und in Flugzeugen umfasst sein soll, und ein Türantrieb 100 dieser Art dient beispielsweise als Antrieb für eine automatische Schiebetüranlage. Die Grundstruktur des Türantriebs 100 bildet ein Trägerprofil 30, welches zur einfacheren Ansicht verkürzt dargestellt ist, zudem ist der wesentliche obere Teil des L-förmigen Trägerprofils 30 aufgeschnitten gezeigt, um die weiteren vorliegend wesentlichen Komponenten des Türantriebs 100 sichtbar zu machen.

Als zentraler Bestandteil weist der Türantrieb 100 eine Motoreinheit 1 auf, und die Motoreinheit 1 besitzt die Grundform eines Quaders, der das Gehäuse 10 der Motoreinheit 1 bildet. Um einen Abtrieb und damit eine Verbindung zu einem nicht näher dargestellten Flügelelement einer Türanlage zu ermöglichen, ist an der Motoreinheit 1 eine Riemenscheibe 34 angeordnet, über die ein Zahnriemen gelegt werden kann, mit dem schließlich die Verbindung zu dem oder den Flügelelementen, beispielsweise den Glasschiebeelementen, hergestellt wird.

Benachbart zur Motoreinheit 1 weist der Türantrieb 100 ein Netzteil 24 und eine Steuerung 25 auf, und das Netzteil 24 und die Steuerung 25 sind an sich gegenüberliegenden Seiten an der Motoreinheit 1 angeordnet. Die Motoreinheit 1 ist mit einem ersten Flanschelement 28 am Trägerprofil 30 befestigt, wobei das erste Flanschelement 28 zugleich das Netzteil 24 mit aufnimmt.

Weiterhin ist die Motoreinheit 1 mit einem zweiten Flanschelement 29 mit dem Trägerprofil 30 verbunden, wobei das zweite Flanschelement 29 zugleich die Steuerung 25 aufnimmt. Alternativ ist auch die Ausführung eines einzigen Flansches möglich, um wenigstens die Motoreinheit 1, das Netzteil 24 und die Steuerung 25 aufzunehmen, ferner besteht die Möglichkeit, dass die Motoreinheit, das Netzteil 24 und/oder die Steuerung 25 jeweils zugeordnete separate Flanschelemente zur Anordnung im oder am Trägerprofil 30 aufweisen.

In das Gehäuse 10 der Motoreinheit 1 ist auf der vorderen Seitenfläche eine fensterartige Aussparung 14 eingebracht, und der Stator 11 weist einen Flächenabschnitt 15 auf, die in die fensterartige Aussparung 14 hineinragt. Damit wird erfindungsgemäß die Möglichkeit geschaffen, den Stator 11 vorteilhaft zu entwärmen, da der Stator 11 über den Flächenabschnitt 15 in einen wärmeleitenden Kontakt mit wenigstens einem weiteren Element gebracht werden kann. Beispielsweise ist der Stator 11 mit einer Innenseite des Trägerprofils 30 mittels eines weiteren Flächenabschnittes in wärmeleitenden Kontakt gebracht worden, wobei der weitere Flächenabschnitt auf der dem vorderen, sichtbaren Flächenabschnitt 15 gegenüberliegenden hinteren Seite des Gehäuses 10 der Motoreinheit 1 vorhanden ist.

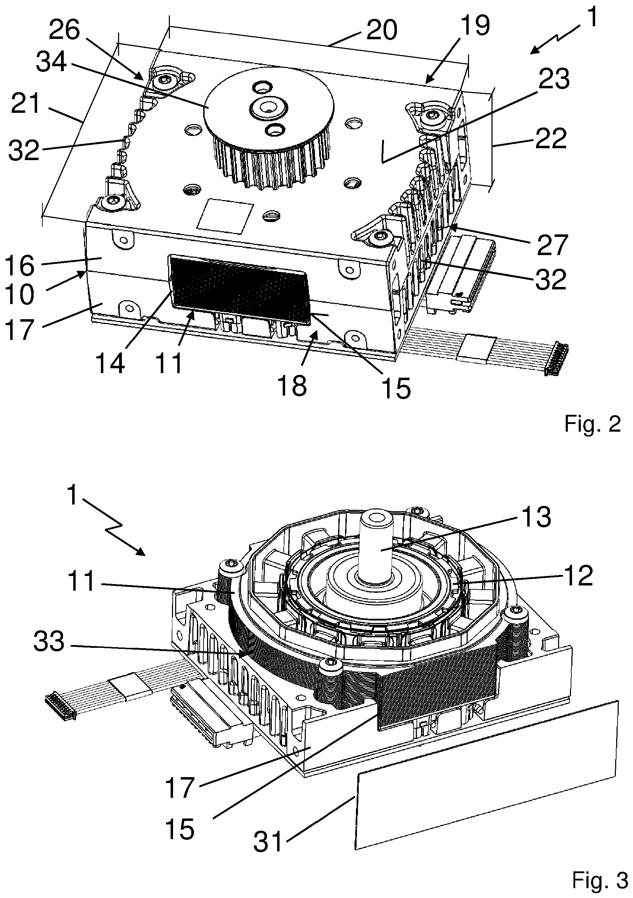

Die Figuren 2 und 3 zeigen jeweils eine perspektivische Ansicht der vereinzelten Motoreinheit 1, und in Figur 2 ist das Gehäuse 10 mit beiden Gehäusehälften 16 und 17 dargestellt, wohingegen in Figur 3 nur die untere Gehäusehälfte 17 gezeigt ist, und die obere Gehäusehälfte 16 wurde zur Veranschaulichung des Stators 11 und des Rotors 12 mit der Abtriebswelle 13 in der Darstellung entnommen.

Die Form des Gehäuses 10 bildet einen Quader, und der Quader ist bestimmt durch die Längskante 20, die Breitenkante 21 und die Höhenkante 22, wobei die Seitenflächen 26, 27 aufgespannt werden durch die Breitenkante 21 und die Höhenkante 22. Sämtliche Kanten 20, 21, 22 stehen dabei senkrecht aufeinander. Die Seitenflächen 26 und 27, an die die Flanschelemente 28, 29 gemäß Figur 1 angebracht werden, sind mit Kühlrippen 32 ausgeführt.

Die vorderseitige und rückseitige Außenseite 18, 19 des Gehäuses 10, die durch die Längskante 20 und die Höhenkante 22 aufgespannt wird, weist die fensterförmigen Aussparungen 14 auf, in die der Flächenabschnitt 15 des Stators 11 jeweils hineinragt. Die Oberfläche der Flächenabschnitte 15 kann mit der Außenseite der vorderseitigen und rückseitigen Fläche des Gehäuses 10 bündig in einer gemeinsamen Ebene abschließen.

Der nach außen weisende Flächenabschnitt 15 des Stators 11 dient zum wärmeübertragenden Kontakt mit einem weiteren Körper, beispielsweise mit dem Trägerprofil 30 oder mit einem weiteren, separaten Kühlkörper. Dadurch kann trotz des im Wesentlichen geschlossen ausgeführten Gehäuses 10 mit der oberen und unteren Gehäusehälfte 16,17 der Stator 11 in direkten wärmeübertragenden Kontakt mit einem Motorumbauteil gebracht werden, beispielsweise mit dem Trägerprofil 30 oder mit einem separaten Kühlkörper. Zu elektrischen Isolierung und/oder zur Verbesserung des Wärmeüberganges kann ein Wärmeübergangsmittel 31, beispielsweise in Form eines Wärmepads, vor die Fläche des Gehäuses 10 mit der fensterartigen Aussparung 14 angeordnet werden, wobei das Wärmeübergangsmittel 31 beispielsweise auch an die Flächengröße des Flächenabschnittes 15 des Stators 11 in seiner Größe angepasst sein kann. Außerhalb des Gehäuses 10 befindet sich in der Darstellung oberseitig die Riemenscheibe 34 zur Ankopplung eines Zahnriemens oberhalb der Stirnfläche 23 des Gehäuses 10, die über die Längskante 20 und die Breitenkante 21 aufgespannt wird.

Der Stator 11 ist innerhalb der unteren, zweiten Gehäusehälfte 17 in einer Aufnahmevertiefung aufgenommen. Innerhalb der unteren Gehäusehälfte 17, jedoch auch in nicht näher gezeigter Weise in der oberen Gehäusehälfte 16, befindet sich ein im Wesentlichen ringförmiger Aufnahmebereich, in dem der Stator 11 aufgenommen ist. Der Wärmeübergangsspalt 33 vergibt sich als zumindest teilweise umlaufender Ringspalt zwischen der Außenseite des Stators 11 und der Innenmantelfläche des Aufnahmebereiches und weist kleine Spaltmaße auf, um den Stator 11 auch bereits über die Gehäusehälften 16, 17 zu entwärmen.

Wird die Motoreinheit 1 betrieben, so erwärmt sich der Stator 11 durch eine Bestromung der nicht näher gezeigten Wicklung auf dem Stator 11, und die Wärme aus dem Stator 11 kann mit dem sehr klein bemessenen Wärmeübergangsspalt 33 in die Gehäusehälften 16, 17 übergehen, beispielsweise wenn der Wärmeübergangsspalt 33 eine Übergangspassung aufweist. Der Wärmeübergangsspalt 33 ist daher vorteilhafterweise als Übergangspassung ausgeführt. Auf der der Stirnfläche 23 gegenüben liegenden Rückseite des Quaders befindet sich eine Leiterkarte 35, auf der Leiterbahnen angeordnet sind, die insbesondere zur Kontaktierung und Beschaltung der Wicklung des Stators 11 dienen. Die Leiterkarte 35 ist dabei mit Haltelementen außen am Gehäuse 10 der Motoreinheit 1 befestigt.

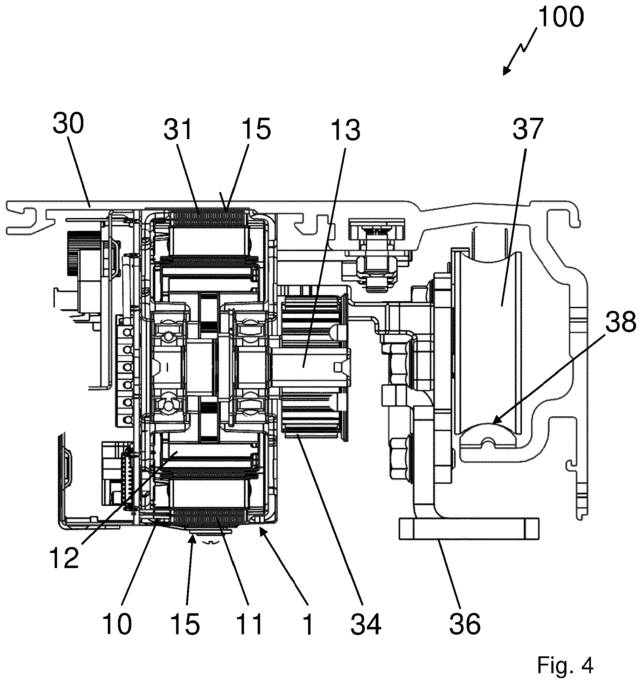

Figur 4 zeigt eine Querschnittsansicht der Anordnung der Motoreinheit 1 in bzw. an dem Trägerprofil 30 des Türantriebes 100. Die Anordnung ist so ausgeführt, dass in der späteren Betriebslage des Türantriebs 100 die Abtriebswelle 13 horizontal verläuft, die mit dem Rotor 12 verbunden ist und auf der die Riemenscheibe 34 aufgebracht ist. Vor der Riemenscheibe befindet sich der Bewegungsraum für den Läufer 36 innerhalb des Trägerprofils 30, und am Trägerprofil kann ein Flügelelement der Türanlage angeordnet werden, beispielsweise ein Glaselement einer automatischen Schiebetüranlage. Der Läufer 36 ist mit Rollen 37 auf einer Schiene 38 im Trägerprofil 30 geführt, und in nicht näher gezeigter Weise ist der Läufer 36 mit der Riemenscheibe 34 über einen Zahnriemen bewegungsgekoppelt.

Oberseitig grenzt der sich innerhalb des Gehäuses 10 aufgenommene Stator 11 der Motoreinheit 1 an die Innenseite des Trägerprofils 30 an, wobei ein Flächenabschnitt 15 des Stators 11 insbesondere über das Wärmeübergangsmittel 31 an das Trägerprofil 30 angrenzt. Der Flächenabschnitt 15 des Stators 11 bildet auf der Außenseite des Stators 11 eine Planfläche, sodass ein Wärmeübergang über eine so geschaffene Fläche erfolgen kann. Der Stator 11 weist auf seiner Außenumfangsseite zwei plan ausgeführte Flächenabschnitte 15 auf, wobei der unterseitige Flächenabschnitt 15 zur Anordnung eines nicht dargestellten Kühlkörpers dient.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 100: Türantrieb

- 1: Motoreinheit

- 10: Gehäuse
- 11: Stator
- 12: Rotor
- 13: Abtriebswelle
- 14: Aussparung
- 15: Flächenabschnitt
- 16: Gehäusehälfte
- 17: Gehäusehälfte
- 18: Außenseite
- 19: Außenseite
- 20: Längskante
- 21: Breitenkante
- 22: Höhenkante
- 23: Stirnfläche
- 24: Netzteil
- 25: Steuerung
- 26: Seitenfläche
- 27: Seitenfläche
- 28: Flanschelement
- 29: Flanschelement
- 30: Trägerprofil
- 31: Wärmeübergangsmittel
- 32: Kühlrippe
- 33: Wärmeübergangsspalt
- 34: Riemenscheibe
- 35: Leiterkarte
- 36: Läufer

## Patentansprüche

1. Türantrieb (100) zur Anordnung an oder in Verbindung mit einer Türanlage, mit dem zumindest ein Flügelelement der Türanlage bewegbar ist, aufweisend eine Motoreinheit (1) mit einem Gehäuse (10), in dem ein Stator (11) ruhend aufgenommen ist und wobei ein Rotor (12) drehbeweglich im Gehäuse (10) angeordnet ist, der eine Abtriebswelle (13) aufweist, wobei die Abtriebswelle (13) mit dem Flügelelement antreibend in Wirkverbindung bringbar ist, wobei der Türantrieb ein Trägerprofil (30) umfasst, **dadurch gekennzeichnet, dass** das Gehäuse (10) zumindest eine fensterartige Aussparung (14) aufweist, in die ein Flächenabschnitt (15) des Stators (11) hineinragt, und wobei die Motoreinheit (1) relativ dem Trägerprofil (30) des Türantriebs (100) so angeordnet ist, dass eines der Flächenabschnitte (15) des Stators (11) wenigstens mittelbar wärmeleitend in Kontakt mit dem Trägerprofil (30) gebracht ist.

2. Türantrieb (100) nach Anspruch 1, **dadurch gekennzeichnet, dass** das Gehäuse (10) der Motoreinheit (1) zwei wenigstens mittelbar miteinander verbundene Gehäusehälften (16, 17) aufweist, die miteinander verbunden einen Quader ausbilden.

3. Türantrieb (100) nach Anspruch 1 oder 2, **dadurch gekennzeichnet, dass** die Gehäusehälften (16, 17) wenigstens mittelbar aneinander anliegend miteinander verschraubt sind und/oder wobei das Gehäuse (10) fensterartige Aussparungen (14) auf sich gegenüberliegenden Außenseiten (18, 19) aufweist.

4. Türantrieb (100) nach einem der Ansprüche 1 bis 3, **dadurch gekennzeichne**t, dass die Motoreinheit (1) eine Längskante (20), eine Breitenkante (21) und eine Höhenkante (22) bestimmt ist, wobei die Längskante (20) größer ist als die Breitenkante (21) und/oder wobei die Breitenkante (21) größer ist als die Höhenkante (22).

5. Türantrieb (100) nach Anspruch 4, **dadurch gekennzeichnet, dass** die Längskante (20) und die Breitenkante (21) eine Stirnfläche (23) aufspannen, wobei die Abtriebswelle (13) senkrecht aus der Stirnfläche (23) hervorsteht.

6. Türantrieb (100) nach Anspruch 4 oder 5, **dadurch gekennzeichnet, dass** wenigstens ein Netzteil (24) und eine Steuerung (25) vorgesehen sind, wobei das Netzteil (24) und die Steuerung (25) zumindest mittelbar an gegenüberliegenden Seitenflächen (26, 27) angeordnet sind, die über die Breitenkante (21) und die Höhenkante (22) aufgespannt sind.

7. Türantrieb (100) nach Anspruch 6, **dadurch gekennzeichnet, dass** ein erstes Flanschelement (28) vorgesehen ist, das an der ersten Seitenfläche (26) angeordnet ist und insbesondere das Netzteil (24) aufnimmt, und dass ein zweites Flanschelement (29) vorgesehen ist, das an der zweiten Seitenfläche (27) angeordnet ist und insbesondere die Steuerung (25) aufnimmt, wobei die Motoreinheit (1) über die beiden Flanschelemente (28, 29) im Türantrieb (100) gehalten ist.

8. Türantrieb (100) nach einem der vorgenannten Ansprüche, **dadurch gekennzeichnet, dass** ein Grundkörper des Türantriebes (100) mittels des Trägerprofils (30) gebildet ist, wobei die Motoreinheit (1) in Bezug auf eine betriebsfertige Einbaulage so zum Trägerprofil (30) ausgerichtet ist, dass die Abtriebswelle (13) im Betriebszustand des Türantriebes (100) eine horizontale Erstreckung aufweist.

9. Türantrieb (100) nach Anspruch 8, **dadurch gekennzeichnet, dass** die Flanschelemente (28, 29) am Trägerprofil (30) befestigt sind, sodass die Motoreinheit (1) mittels der Flanschelemente (28, 29) am Trägerprofil (30) angeordnet ist.

10. Türantrieb (100) nach einem der vorgenannten Ansprüche, **dadurch gekennzeichnet, dass** zwischen dem Flächenabschnitt (15) des Stators (11) und dem Flächenabschnitt des Trägerprofils (30) ein flächenförmiges Wärmeübergangsmittel (31) zur Bildung des wärmeleitenden Kontaktes angeordnet ist.

11. Türantrieb (100) nach einem der vorgenannten Ansprüche, **dadurch gekennzeichnet, dass** gegenüberliegenden Seitenflächen (26, 27), die über die Breitenkante (21) und die Höhenkante (22) aufgespannt sind, geschlossen ausgebildet sind und/oder Kühlrippen (32) aufweisen.

12. Türantrieb (100) nach einem der vorgenannten Ansprüche, **dadurch gekennzeichnet, dass** wenigstens ein Flächenabschnitt (15) des Stators (11) durch die fensterartige Aussparung (14) hindurch in einen Wärmeübergangskontakt mit einem separaten Kühlkörper gebracht ist.

13. Türantrieb (100) nach einem der vorgenannten Ansprüche, **dadurch gekennzeichnet, dass** der Stator (11) eine ringförmige Grundstruktur aufweist und in wenigstens einer der Gehäusehälften (16, 17) aufgenommen ist, wobei zwischen der radialen Außenseite des Stators (11) und der Innenseite der Gehäusehälfte (16, 17) ein wenigstens teilweise umlaufender Wärmeübergangsspalt (33) ausgebildet ist.

14. Türanlage mit einem Türantrieb (100) gemäß einem der vorgenannten Ansprüche, aufweisend wenigstens ein Verbindungselement zum Verbinden mit einem Flügel und/oder ein Flügelelement, mit dem der Türantrieb (100) antreibend in Wirkverbindung steht.

## Claims

1. A door drive (100) for arrangement on or in connection with a door system, with which at least one leaf element of the door system can be moved, having a motor unit (1) with a housing (10) in which a stator (11) is accommodated in a stationary manner and wherein a rotor (12) is arranged so as to be rotatably movable in the housing (10), which has an output shaft (13), wherein the output shaft (13) can be brought into operative connection in a driving manner with the leaf element, wherein the door drive comprises a support profile (30),
**characterized in that** the housing (10) has at least one window-like recess (14) into which a surface section (15) of the stator (11) projects, and wherein the motor unit (1) is arranged relative to the support profile (30) of the door drive (100) such that one of the surface sections (15) of the stator (11) is brought into contact with the support profile (30) at least indirectly in a heat-conducting manner.

2. The door drive (100) according to claim 1, **characterized in that** the housing (10) of the motor unit (1) has two housing halves (16, 17) which are at least indirectly connected to one another and which, when connected to one another, form a cuboid.

3. The door drive (100) according to claim 1 or 2, **characterized in that** the housing halves (16, 17) are screwed together at least indirectly abutting one another and/or wherein the housing (10) has window-like recesses (14) on opposite outer sides (18, 19).

4. The door drive (100) according to one of claims 1 to 3, **characterized in that** the motor unit (1) has a longitudinal edge (20), a width edge (21) and a height edge (22), wherein the longitudinal edge (20) is larger than the width edge (21) and/or wherein the width edge (21) is larger than the height edge (22).

5. The door drive (100) according to claim 4, **characterized in that** the longitudinal edge (20) and the width edge (21) span an end face (23), wherein the output shaft (13) protrudes vertically from the end face (23).

6. The door drive (100) according to claim 4 or 5, **characterized in that** at least one power supply (24) and a controller (25) are provided, wherein the power supply (24) and the controller (25) are arranged at least indirectly on opposite side surfaces (26, 27) which are spanned over the width edge (21) and the height edge (22).

7. The door drive (100) according to claim 6, **characterized in that** a first flange element (28) is provided, which is arranged on the first side surface (26) and in particular accommodates the power supply (24), and **in that** a second flange element (29) is provided, which is arranged on the second side surface (27) and in particular accommodates the controller (25), wherein the motor unit (1) is held in the door drive (100) via the two flange elements (28, 29).

8. The door drive (100) according to one of the preceding claims, **characterized in that** a base body of the door drive (100) is formed by means of the support profile (30), wherein the motor unit (1) is aligned with the support profile (30) in relation to a ready-to-use installation position such that the output shaft (13) has a horizontal extension in the operating state of the door drive (100).

9. The door drive (100) according to claim 8, **characterized in that** the flange elements (28, 29) are attached to the support profile (30) such that the motor unit (1) is arranged on the support profile (30) by means of the flange elements (28, 29).

10. The door drive (100) according to one of the preceding claims, **characterized in that** a surface-shaped heat transfer means (31) is arranged between the surface section (15) of the stator (11) and the surface section of the support profile (30) to form the heat-conducting contact.

11. The door drive (100) according to one of the preceding claims, **characterized in that** opposite side surfaces (26, 27), which are spanned over the width edge (21) and the height edge (22), are designed to be closed and/or have cooling fins (32).

12. The door drive (100) according to one of the preceding claims, **characterized in that** at least one surface section (15) of the stator (11) is brought into heat transfer contact with a separate heat sink through the window-like recess (14).

13. The door drive (100) according to one of the preceding claims, **characterized in that** the stator (11) has an annular base structure and is accommodated in at least one of the housing halves (16, 17), wherein an at least partially circumferential heat transfer gap (33) is designed between the radial outside of the stator (11) and the inside of the housing half (16, 17).

14. A door system with a door drive (100) according to one of the preceding claims, having at least one connecting element for connecting to a leaf and/or a leaf element with which the door drive (100) is in operative connection in a driving manner.

## Revendications

1. Entraînement de porte (100) pour un agencement sur ou en combinaison avec un système de porte, avec lequel au moins un élément de battant du système de porte peut être déplacé, présentant une unité moteur (1) avec un boîtier (10), dans lequel un stator (11) est logé au repos et dans lequel un rotor (12) est agencé rotatif dans le boîtier (10), qui présente un arbre de sortie (13), dans lequel l'arbre de sortie (13) peut être amené en liaison fonctionnelle par entraînement avec l'élément de battant, dans lequel l'entraînement de porte comprend un profilé de support (30),
**caractérisé en ce que** le boîtier (10) présente au moins un évidement (14) en forme de fenêtre, dans lequel fait saillie une section de surface (15) du stator (11), et dans lequel l'unité moteur (1) est agencée par rapport au profilé de support (30) de l'entraînement de porte (100) de telle sorte qu'une des sections de surface (15) du stator (11) est amenée au moins indirectement en contact de conduction thermique avec le profilé de support (30).

2. Entraînement de porte (100) selon la revendication 1, **caractérisé en ce que** le boîtier (10) de l'unité moteur (1) présente deux moitiés de boîtier (16, 17) qui sont reliées au moins indirectement l'une à l'autre, qui, une fois reliées l'une à l'autre, forment un parallélépipède rectangle.

3. Entraînement de porte (100) selon la revendication 1 ou 2, **caractérisé en ce que** les moitiés de boîtier (16, 17) sont vissées ensemble au moins indirectement de manière adjacente l'une à l'autre et/ou dans lequel le boîtier (10) présente des évidements (14) en forme de fenêtre sur les côtés extérieurs (18, 19) opposés.

4. Entraînement de porte (100) selon l'une des revendications 1 à 3, **caractérisé en ce que** l'unité moteur (1) est définie par un bord en longueur (20), un bord en largeur (21) et un bord en hauteur (22), dans lequel le bord en longueur (20) est plus grand que le bord en largeur (21) et/ou dans lequel le bord en largeur (21) est plus grand que le bord en hauteur (22).

5. Entraînement de porte (100) selon la revendication 4, **caractérisé en ce que** le bord en longueur (20) et le bord en largeur (21) s'étendent sur une face frontale (23), dans lequel l'arbre de sortie (13) fait saillie verticalement depuis la face frontale (23).

6. Entraînement de porte (100) selon la revendication 4 ou 5, **caractérisé en ce qu'**il est prévu au moins une alimentation électrique (24) et une commande (25), dans lequel l'alimentation électrique (24) et la commande (25) sont agencés au moins indirectement sur des surfaces latérales (26, 27) opposées, qui s'étendent sur le bord en largeur (21) et le bord en hauteur (22).

7. Entraînement de porte (100) selon la revendication 6, **caractérisé en ce qu'**il est prévu un premier élément de bride (28), qui est agencé sur la première surface latérale (26) et reçoit en particulier l'alimentation électrique (24), et qu'il est prévu un second élément de bride (29), qui est agencé sur la seconde surface latérale (27) et reçoit en particulier la commande (25), dans lequel l'unité moteur (1) est maintenue dans l'entraînement de porte (100) par l'intermédiaire des deux éléments de bride (28, 29).

8. Entraînement de porte (100) selon l'une des revendications précédentes, **caractérisé en ce qu'**un corps de base de l'entraînement de porte (100) est formé au moyen du profilé de support (30), dans lequel l'unité moteur (1) est alignée avec le profilé de support (30) par rapport à une position d'installation prête à l'emploi de telle sorte que l'arbre de sortie (13) présente une extension horizontale dans l'état de fonctionnement de l'entraînement de porte (100).

9. Entraînement de porte (100) selon la revendication 8, **caractérisé en ce que** les éléments de bride (28, 29) sont fixés au profilé de support (30), de telle sorte que l'unité moteur (1) est agencée sur le profilé de support (30) au moyen des éléments de bride (28, 29).

10. Entraînement de porte (100) selon l'une des revendications précédentes, **caractérisé en ce qu'**un moyen de transfert de chaleur (31) de forme plate est agencé entre la section de surface (15) du stator (11) et la section de surface du profilé de support (30) pour former le contact de conduction thermique.

11. Entraînement de porte (100) selon l'une des revendications précédentes, **caractérisé en ce que** les surfaces latérales opposées (26, 27), qui s'étendent sur le bord en largeur (21) et le bord en hauteur (22), sont conçues pour être fermés et/ou présentent des ailettes de refroidissement (32).

12. Entraînement de porte (100) selon l'une des revendications précédentes, **caractérisé en ce qu'**au moins une section de surface (15) du stator (11) est amenée en contact de transfert de chaleur avec un dissipateur thermique séparé à travers l'évidement (14) en forme de fenêtre.

13. Entraînement de porte (100) selon l'une des revendications précédentes, **caractérisé en ce que** le stator (11) présente une structure de base annulaire et est reçu dans au moins une des moitiés de boîtier (16, 17), dans lequel une fente de transfert de chaleur (33) au moins partiellement circonférentielle est formée entre le côté extérieur radial du stator (11) et le côté intérieur de la moitié de boîtier (16, 17).

14. Système de porte comportant un entraînement de porte (100) selon l'une des revendications précédentes, présentant au moins un élément de liaison pour la liaison avec un battant et/ou un élément de battant, avec lequel l'entraînement de porte (100) est en liaison fonctionnelle.
